Europäisches Patentamt

European Patent Office

Office européen des brevets

(19)

(11) Numéro de publication: **0 384 820**

**A1**

(12) ## DEMANDE DE BREVET EUROPEEN

(21) Numéro de dépôt: 90400446.2

(22) Date de dépôt: 19.02.90

(51) Int. Cl.5 **C03C 27/02, C03C 27/04, C01B 3/00**

(30) Priorité: 22.02.89 FR 8902277

(43) Date de publication de la demande:
29.08.90 Bulletin 90/35

(84) Etats contractants désignés:
**AT BE CH DE ES FR GB GR IT LI LU NL SE**

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07(FR)**

(72) Inventeur: **Rotman, Frédéric, Teisan K.K.**
**9-1 Chinonome 1-chome, Koto-ku**
**Tokyo 135(JP)**
Inventeur: **Rancon, Yannick**
**36, rue de Villacoublay**
**F-78140 Velizy(FR)**
Inventeur: **Queille, Philippe**
**7, Rue Rieussec**
**F-78220 Viroflay(FR)**
Inventeur: **Olivier, Michel**
**19, Rue de Roussillon, Val des quatre pignons**
**F-78650 Beynes(FR)**

(74) Mandataire: **Le Moenner, Gabriel et al**
**L'AIR LIQUIDE, Société Anonyme pour l'etude et l'exploitation des procédés Georges Claude 75, Quai d'Orsay**
**F-75321 Paris Cédex 07(FR)**

(54) **Procédé d'élaboration d'une liaison verre-métal et appareil pour sa mise en oeuvre.**

(57) L'invention concerne le scellement verre-métal, selon lequel on procède sur une pièce métallique, notamment um alliage à base de fer et nickel ou fer, nickel et colbalt d'abord à une décarburation sous atmosphère, à température comprises entre 950°C et 1100°C, formée d'hydrogène (10 à 99 %), de vapeur d'eau (1 à 8 %), avec un rapport hydrogène/vapeur d'eau supérieur à cinq, le reste éventuel étant de l'azote, puis à une oxydation sous atmosphère, formée d'un gaz vecteur inerte tel l'azote, soit à une température de 600°C à 800°C et une teneur en vapeur d'eau de 8 % à 2 % ; soit à une température de 900°C à 1100°C et une teneur en vapeur d'eau de 4 % à 0,5 % ; après quoi on procède à l'établissement de la liaison. Le mélange gazeux pour une atmosphère de traitement est obtenu par mélange d'azote et d'hydrogène véhiculés en 13 et 14, auquel on adjoint de l'oxygène en 15 devant une chambre catalyique 11 permettant l'élimination de l'oxygène et l'élaboration d'une teneur en vapeur d'eau.

Fig.1

# PROCEDE D'ELABORATION D'UNE LIAISON VERRE-METAL ET APPAREIL POUR SA MISE EN OEUVRE

La présente invention concerne un procédé d'élaboration d'une liaison verre-métal, selon lequel on procède, sur une pièce de métal, notamment les alliages à base de fer et de nickel ou de fer, nickel et cobalt, d'abord à une décarburation sous atmosphère, à une température de l'ordre de 1000° C, formée d'hydrogène et de vapeur d'eau et, le cas échéant, d'un gaz inerte complémentaire tel l'azote, puis à une oxydation sous atmosphère, à température élevée, formée de vapeur d'eau et d'un gaz vecteur inerte tel l'azote, le cas échéant avec une teneur faible en hydrogène, après quoi on procède à l'établissement de la liaison ou scellement entre pièce de métal et de verre.

La liaison verre-métal hermétique trouve sa principale application dans le domaine des industries électroniques ou électrotechniques pour la réalisation de boîtiers d'encapsulation et de passages électriques hermétiques. Le métal est utilisé pour ses propriétés conductrices, tandis que le verre joue le rôle d'isolant. La liaison entre le verre et le métal doit être à la fois étanche et robuste. L'étanchéité permet de protéger les composants électroniques ou électrotechniques de l'environnement externe, tandis que la tenue mécanique de la liaison est nécessaire pour résister aux contraintes de montage ou d'utilisation. Une telle liaison est généralement obtenue grâce à un ou plusieurs passages des matériaux dans des fours de traitement thermique sous atmosphères.

On distingue successivement trois traitements.

Premier traitement : décarburation/dégazage du métal permettant d'éviter la formation de bulles à l'interface lors des traitements ultérieurs, ce qui nuirait à la tenue mécanique de la liaison. Ce traitement se fait à une température de l'ordre de 1.000° C sous une atmosphère décarburante mais réductrice vis à vis du métal, par exemple avec un mélange d'hydrogène et de vapeur d'eau, et, le cas échéant, un gaz inerte complémentaire tel l'azote. La décarburation d'alliage à base de fer, nickel et cobalt a été étudiée par M.R. NOTIS dans un article intitulé "Decarburization of an Iron-Nickel-Colbalt Glass Sealing Alloy" paru dans "Journal of the American Ceramic Society", volume 45, n° 9, septembre 1962.

Deuxième traitement : oxydation du métal après décarburation/dégazage afin de former une couche d'oxyde nécessaire à l'obtention d'une liaison chimique lors du troisième traitement. Cette oxydation se fait à température élevée sous une atmosphère oxydante vis à vis du métal, par exemple avec un mélange de vapeur d'eau et d'un gaz inerte tel l'azote et, le cas échéant, avec une faible teneur en hydrogène. La nécessité de contrôler très précisément le pouvoir oxydant de l'atmosphère a été étudiée par R.P. ABENDROTH dans un article intitulé "Oxide formation and adherence on an Iron- Cobalt-Nickel Glass Sealing Alloy" paru dans "Materials Research & Standards", septembre 1965.

Troisième traitement : scellement de l'ensemble verre et métal par fusion ou ramollissement du verre afin qu'il mouille le métal décarburé et oxydé. Le scellement se fait à une température légèrement inférieure à la température de décarburation/dégazage, sous atmosphère contrôlée.

Les atmosphères de traitement qui entrent en jeu doivent avoir des teneurs en vapeur d'eau bien déterminées puisque ces teneurs en vapeur d'eau interviennent aussi bien en tant que telles, qu'en relation dans un rapport avec la teneur en hydrogène, de façon à conférer au gaz un effet décarburant, un effet oxydant, un effet réducteur, un effet neutre.

L'obtention des atmosphères humides pour ces liaisons verre-métal est actuellement assurée par simple barbotage du gaz dans un récipient contenant de l'eau. Cependant, cette façon de faire présente les inconvénients d'imposer un point de rosée à peu près égal à la température ambiante, et des fluctuations du point de rosée par variation de la température ambiante et du niveau d'eau dans le barboteur. Pour obtenir des points de rosée supérieurs à la température ambiante, on doit alors chauffer l'eau du barboteur et si l'on veut, au contraire, obtenir des points de rosée inférieurs à la température ambiante, on doit refroidir l'eau du barboteur ou diluer le gaz saturé en eau par un gaz sec. D'autre part pour obtenir un point de rosée bien fixé, on doit actuellement non seulement réguler la température de l'eau du barboteur, donc mettre en oeuvre des bains thermiquement isolés et thermostatés, mais on doit également réguler le niveau d'eau, donc mettre en oeuvre une sonde de niveau couplée à un dispositif automatique de remplissage. Un agencement de ce type s'avère coûteux, mais en outre, malgré tous ces perfectionnements, il subsiste encore différents inconvénients :

- d'une part la valeur du point de rosée engendrée est fonction de la géométrie du barboteur (en particulier de la surface d'échange eau/gaz), d'où l'obligation de déterminer par étalonnage les conditions opératoires de chaque barboteur (chauffage et dilution) afin d'obtenir les points de rosée désirés.

- d'autre part, dans le cas où l'on désire changer de point de rosée pour passer à un point de rosée supérieur, ce changement obtenu par chauffage du bain présente l'inconvénient d'avoir un temps de réponse long.

EP 0 384 820 A1

- enfin, dans le cas où l'on désire passer à un point de rosée inférieur, le refroidissement du bain présente le même inconvénient d'inertie thermique que ci-dessus, tandis que la dilution présente l'inconvénient d'un changement du débit total lors du passage d'un point de rosée à l'autre.

Ces inconvénients peuvent certes être écartés par une extension quasi-infinie de la surface d'échange eau-gaz par traversée, par exemple, d'un grand volume de matière poreuse, comme décrit dans l'article intitulé "Advanced gas Moisturizing System for Ceramic processing applications" par F. W. GIACOBBE, paru dans "American Ceramic Society Bulletin", Volume 66, n° 10, 1987, et par conservation du débit total par réajustement des débits de gaz humidifié et de gaz sec.

Cependant, un tel dispositif d'humidification reste encore peu souple. Sa réalisation est très onéreuse et le problème de l'inertie thermique, dans le cas où l'on désire changer la température du bain, n'est toujours pas résolu.

La présente invention a pour objet de disposer d'un matériel à fonctions plus performantes qui soit simple, souple et peu onéreux. En outre, elle permet de répondre à l'attente de procédés nécessitant des atmosphères à points de rosée à la fois contrôlés et évolutifs, particulièrement nécessaires dans la technique de liaisons verre-métal.

Le procédé d'élaboration d'une liaison verre-métal selon l'invention est caractérisé par la combinaison des mesures suivantes :

a) la décarburation éventuelle est faite sous atmosphère, à température comprise entre 950°C et 1100°C, avec une teneur en hydrogène de 10 % à 99 %, une teneur en vapeur d'eau de 1 % à 8 % et un rapport hydrogène/vapeur d'eau supérieur ou égal à cinq ;

b) L'oxydation est faite:
- soit à une température de 600°C à 800°C et une teneur en vapeur d'eau de 8 % à 2 % ;
- soit à une température de 900°C à 1100°C et une teneur en vapeur d'eau de 4 % à 0,5 % ;
et, en cas de présence d'hydrogène, un rapport vapeur d'eau/hydrogène supérieur ou égal à trois et une teneur en hydrogène inférieure ou égale à 1 %.

c) l'une au moins des atmosphères, qui contient de la vapeur d'eau et qui concerne la décarburation, l'oxydation ou le scellement, est obtenue par un mélange d'hydrogène et d'une quantité d'oxygène d'appoint, le cas échéant d'un gaz neutre tel l'azote, l'hydrogène étant en quantité au moins suffisante pour obtenir ensuite par réaction catalytique la teneur désirée en vapeur d'eau et le cas échéant la teneur excédentaire en hydrogène qui correspondent à la composition de l'atmosphère requise.

La demanderesse a bien conscience que le principe intrinsèque de réalisation par catalyse d'une teneur en vapeur d'eau dans un gaz a déjà été proposé, par exemple dans l'article intitulé "Réduction d'oxyde de fer par hydrogène pur" par L. GUILLET, M. EUDIER et Ph. POUPEAU paru dans "Mémoires Scientifiques Revue Métallurgique" n° 7/8, 1967, où l'on propose d'employer, dans une étude de réduction de protoxyde de fer, soit de l'hydrogène pur, soit des mélanges d'hydrogène, de vapeur d'eau et d'argon.

Cependant, la Demanderesse constate que, malgré la connaissance largement répandue de la réaction chimique concernée et de la possibilité de la réaliser par réaction catalytique, aucune application à échelle industrielle au scellement verre-métal n'a été proposée à ce jour, malgré les difficultés d'obtention de telles atmosphères humides selon les techniques rappelées ci-dessus et malgré l'effet particulièrement attractif de la solution appliquée, selon l'invention, dans la technique en question, où la reproductibilité et la précision des conditions opératoires de fabrication sont primordiales.

Le catalyseur utilisé dans le procédé selon l'invention est avantageusement choisi de façon à permettre une réaction immédiate et complète de l'oxygène et cela à température ambiante, avec une teneur résiduelle en oxygène inférieure à 10 vpm. Un catalyseur de ce type à autonomie énergétique qui peut être utilisé, est du palladium sur support d'alumine qui peut traiter un débit horaire jusqu'à environ 5 000 à 10 000 fois le volume de réacteur. Ce type de catalyseur ne nécessite généralement aucun chauffage préalable du gaz et en outre n'implique pas une séquence de démarrage du réacteur avec rejet initial de gaz à l'air libre.

Selon une autre variante de mise en oeuvre, l'oxygène d'appoint est initialement présent dans l'azote, qui est de l'azote brut obtenu par séparation d'air par adsorption ou perméation.

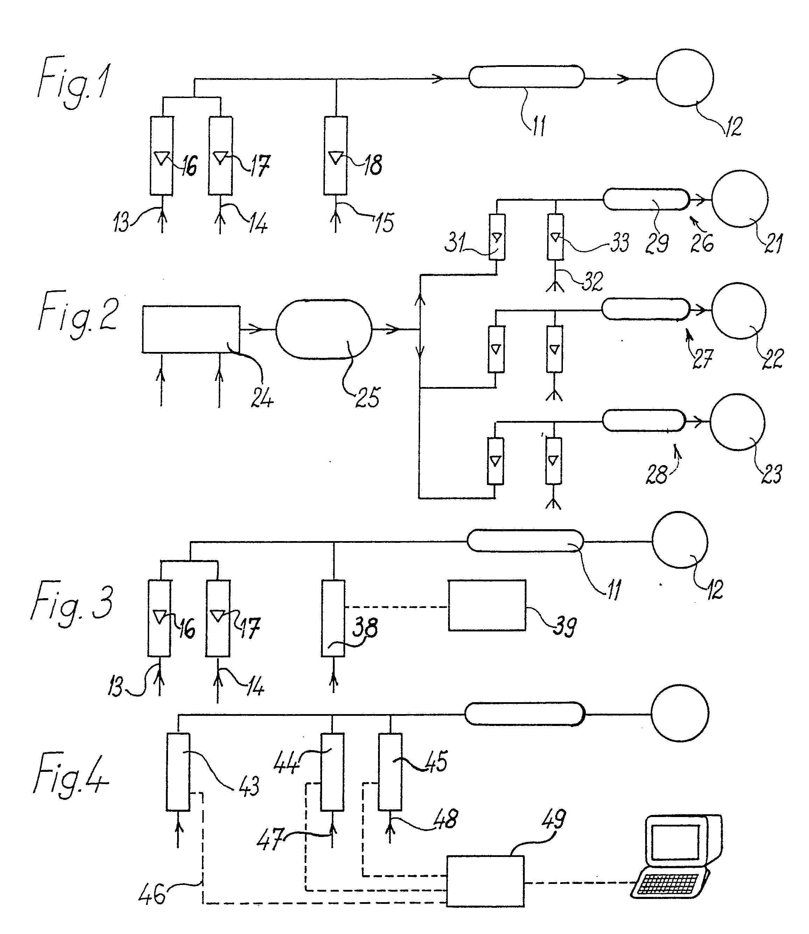

Les caractéristiques et avantages de l'invention ressortiront d'ailleurs de la description qui suit, à titre d'exemple, en référence aux figures 1 à 4 qui représentent schématiquement quatre formes de mise en oeuvre de l'invention.

La figure 1 représente une forme de mise en oeuvre simplifiée où les trois constituants gazeux azote ($N_2$), hydrogène($H_2$), oxygène ($O_2$) sont acheminés vers une chambre catalytique 11 et de là vers un four 12 via des conduites d'apport 13 pour l'azote, 14 pour l'hydrogène, 15 pour l'oxygène, chaque conduite 13, 14 et 15 incorporant un débitmètre à flotteur 16-17-18 équipé d'une vanne de réglage qui permet d'ajuster le débit. On assure ainsi, par un simple réglage des débits, une facile mise en oeuvre de points de rosée supérieurs ou inférieurs à la température ambiante.

Selon la figure 2 qui concerne une alimentation commune pour plusieurs fours 21, 22, 23, ... un prémélange d'azote ($N_2$), d'hydrogène ($H_2$), est d'abord réalisé dans un mélangeur 24 pour ensuite être acheminé vers plusieurs postes d'utilisation après passage dans une capacité-tampon commune 25. Chaque ligne de distribution 26, 27, 28, ... comprend :
- un débitmètre 31 pour le réglage du débit du mélange d'azote ($N_2$) et d'hydrogène ($H_2$) ;
- une conduite d'apport 32 à un débitmètre 33 pour le réglage du débit d'oxygène ($O_2$) ;
- une chambre catalytique 29 pour la génération de la vapeur d'eau.

On assure ainsi l'alimentation de plusieurs fours en parallèle et l'on peut, pour un mélange $N_2/H_2$ donné, mettre en oeuvre des points de rosée différents d'un four à l'autre.

Selon la figure 3 qui est une variante de la figure 1, où les mêmes éléments sont désignés par les mêmes chiffres de référence, on assure une plus grande stabilité du point de rosée par l'obtention d'un débit d'oxygène particulièrement stable, ce qui est atteint avec un appareil du type régulateur de débit massique 38 équipé d'une commande 39.

Selon la figure 4, on emploie trois régulateurs de débit massique 43, 44 et 45 dans les conduites d'azote 46, d'hydrogène 47 et d'oxygène 48, couplés à un dispositif 49 à commande informatique, permettant un pilotage dynamique du point de rosée par le biais d'un pilotage automatique des débits. On peut ainsi aisément programmer un profil de point de rosée simultanément avec un profil thermique tout en conservant un débit gazeux total constant.

On peut bien entendu envisager toute combinaison de ces différentes mises en oeuvre.

On donne maintenant ci-après quelques exemples de mise en oeuvre d'atmosphères appliquées au scellement verre-métal.

PREMIER EXEMPLE : Mise en oeuvre d'une atmosphère à point de rosée contrôlé pour la décarburation et le dégazage d'un alliage à base de Fe, Ni et Co :

Afin de décarburer à 1050°C un alliage à base de fer, nickel (29 %) et cobalt (17 %) , on met en oeuvre le dispositif selon la figure 2. Cette version qui met en oeuvre uniquement des débitmètres à flotteur a été choisie car la précision sur le point de rosée obtenue à l'aide des débitmètres à flotteurs est suffisante pour l'étape de décarburation. Les débitmètres utilisés ont une précision égale à 2 % de leur pleine échelle. Ils sont choisis de telle sorte que les débits mesurés se situent environ à mi-échelle.

L'objectif est d'obtenir une atmosphère décarburante azote ($N_2$) hydrogène ($H_2$) vapeur d'eau ($H_2O$) comprenant 40 % d'hydrogène et 4 % de vapeur d'eau, le reste étant de l'azote. Cette teneur en vapeur d'eau est largement suffisante pour permettre la décarburation du métal, tandis que le rapport $H_2/H_2O$ est assez élevé pour empêcher son oxydation. L'utilisation d'un mélangeur et d'une capacité-tampon permet d'alimenter plusieurs fours de décarburation et de pouvoir travailler dans une gamme de débits différents. On a ainsi mis en oeuvre l'invention pour quatre valeurs différentes de débits injectés 1 $m^3/h$, 3 $m^3/h$, 10 $m^3/h$ et 25 $m^3/h$.

Les atmosphères décarburantes sont obtenues à partir d'un mélange primaire d'azote et d'hydrogène issu du mélangeur.

La composition du mélange, compte tenu de la précision du mélangeur est ajustée à : 56 % ± 1 % d'azote $N_2$
44 % ± 1 % d'hydrogène $H_2$

Une mesure d'humidité sur ce mélange révèle une teneur en vapeur d'eau inférieure à 10 ppm (point de rosée <-60°C).

Le mélange azote-hydrogène est envoyé dans la capacité-tampon qui permet d'alimenter plusieurs fours. Le débit total est divisé en plusieurs débits individuels, chacun étant contrôlé au moyen d'un débitmètre au niveau de chaque four.

Devant chaque chambre catalytique, on ajoute à chaque débit individuel d'azote-hydrogène un débit d'oxygène égal à 2 % + 0.08 % de ce débit d'azote et d'hydrogène. La précision sur le débit d'oxygène est égale à celle donnée par le débitmètre à flotteur de la ligne d'oxygène.

Lors du passage sur le catalyseur, tout l'oxygène réagit avec une partie de l'hydrogène pour former de la vapeur d'eau. C'est ainsi que les valeurs calculées des proportions relatives des constituants gazeux à la sortie de chaque chambre catalytique sont les suivantes :
56 % ± 3.1 % d'azote ($N_2$)
40 % ± 3.1 % d'hydrogène ($H_2$)
4 % ± 0.4 % de vapeur d'eau ($H_2O$)

4

quelques ppm d'$O_2$

Un contrôle de ces teneurs a été fait grâce à des piquages en sortie de chaque chambre catalytique : la teneur en hydrogène est mesurée par un chromatographe, la teneur en vapeur d'eau par un hygromètre à miroir refroidi muni d'une sonde pour points de rosée élevés, tandis que la teneur en oxygène est mesurée par un analyseur à cellule électrolytique.

| Espèce analysée | $H_2$ | $H_2O$ | $O_2$ |
|---|---|---|---|
| d = 1 $m^3$.h | 39,5 % ± 0,2 % | 3,94 % ± 0,05 % | < 5 ppm |
| d = 3 $m^3$ h | 41,6 % ± 0,2 % | 4,21 % ± 0,05 % | < 5 ppm |
| d = 10 $m^3$/h | 40,3 % ± 0,2 % | 3,97 % ± 0,05 % | < 5 ppm |
| d = 25 $m^3$.h | 39,2 % ± 0,2 % | 4,09 % ± 0,05 % | < 5 ppm |

Compte tenu des incertitudes expérimentales, les teneurs mesurées sont tout à fait conformes aux teneurs calculées. Cet exemple permet d'illustrer la facilité d'obtention du point de rosée, celui-ci étant généré par ajustement de la proportion d'oxygène, c'est-à-dire par simple réglage des débits. D'autre part, la correspondance entre valeurs calculées et valeurs mesurées montre que pour obtenir un point de rosée donné, il suffit d'ajuster les débits aux valeurs calculées. Par conséquent, aucun étalonnage n'est nécessaire.

DEUXIEME EXEMPLE : Mise en oeuvre d'une atmosphère à point de rosée contrôlé pour l'oxydation d'un alliage à base de fer, nickel et cobalt.

Afin d'oxyder à 1000°C un alliage à base de fer, nickel (29 %) et cobalt (17 %), préalablement décarburé, on a mis en oeuvre la disposition selon la figure 3.

Cette version avec régulateur de débit massique sur l'oxygène (précision égale à 1 % de la pleine échelle) est recommandée dans ce cas, car la teneur en vapeur d'eau du mélange injecté dans le four est un paramètre critique pour l'étape d'oxydation : il est nécessaire de contrôler très précisément l'épaisseur et la nature de la couche d'oxyde formé, comme l'indiquent R.P. ABENDROTH dans l'article "Oxide formation and adherence on an Iron-cobalt nickel glass sealing alloy" paru dans "Materials Research and Standards", Septembre 1965, ainsi que J.Mc CORMICK et L. ZAKRAYSEK dans l'article " A metallographic test for glass-to-metal seal quality" paru dans Ann.Proc.Reliability Phys. Syrupos 17th en 1979.

L'objectif est d'obtenir 1 $m^3$/h d'atmosphère oxydante $N_2$, $H_2$, $H_2O$ avec 2 % de vapeur d'eau et un résiduel d'hydrogène de 0,5 %, le reste étant de l'azote. Le rapport $H_2O/H_2$ (4) ainsi choisi permet une oxydation contrôlée du métal.

Cette atmosphère oxydante est obtenue à partir d'un mélange primaire de 975 l/h d'azote et 25 l/h d'hydrogène. La composition des 1000 l/h de ce mélange primaire est donc :

$N_2$ = 97,5 % ± 0.2 %

$H_2$ = 2,5 % ± 0.2 %

Une mesure d'humidité sur ce mélange révèle une teneur en vapeur d'eau inférieure à 10 ppm (point de rosée <-60°C).

On ajoute à ce premier mélange un débit d'oxygène de 10 l/h. Ce débit étant mesuré par un régulateur de débit massique, la précision est de $^+$ 0.2 l/h.

Par passage dans la chambre catalytique, tout l'oxygène réagit avec l'hydrogène en excès pour former de l'eau.

Les valeurs attendues des débits gazeux à la sortie de la chambre catalytique sont les suivantes :

975 l/h d'azote ($N_2$)

5 l/h d'hydrogène ($H_2$)

20 l/h de vapeur d'eau ($H_2O$)

soit un total de 1000 l/h.

Ce résultat permet d'illustrer l'un des avantages de l'invention : quelque soit la teneur en eau désirée, le débit global reste constant (1000 l/h dans ce cas).

Compte tenu des incertitudes sur les débits gazeux, les proportions calculées relatives des constituants gazeux sont les suivantes :

$N_2$ = 97.5 % ± 0.3 %

5

$H_2 = 0.5 \% \pm 0.15 \%$

$H_2O = 2.0 \% \pm 0.1 \%$

$O_2 = 0 \%$

Un piquage de contrôle en sortie du système catalytique a permis d'analyser le mélange gazeux afin de contrôler la teneur des différents constituants :

$H_2 = 0.58 \% \pm 0.1 \%$

$H_2O = 2.04 \% \pm 0.03 \%$

$O_2 < 5$ ppm

Compte tenu des incertitudes expérimentales, les teneurs mesurées sont tout à fait conformes aux teneurs calculées. Par conséquent, aucun étalonnage de l'appareil n'est nécessaire.

D'autre part, l'emploi d'un régulateur de débit massique sur l'oxygène permet de contrôler facilement la stabilité du point de rosée.

## Revendications

1. Procédé d'élaboration d'une liaison verre-métal, selon lequel on procède, sur une pièce de métal, notamment un alliage à base de fer et de nickel ou de fer, nickel et cobalt, d'abord et éventuellement à une décarburation sous atmosphère, à une température de l'ordre de 1000° C, comprenant de l'hydrogène et de la vapeur d'eau, et le cas échéant un gaz inerte tel l'azote, puis à une oxydation sous atmosphère, à température élevée, formée de vapeur d'eau, d'un gaz vecteur inerte tel l'azote, le cas échéant avec une teneur faible en hydrogène, après quoi on procède à l'établissement de la liaison ou scellement de ladite pièce de métal avec une pièce de verre, caractérisé par la combinaison des mesures suivantes :

a) la décarburation éventuelle est faite sous atmosphère, à température comprise entre 950° C et 1100° C, avec une teneur en hydrogène de 10 % à 99 %, une teneur en vapeur d'eau de 1 % à 8 % et un rapport hydrogène/vapeur d'eau supérieur ou égal à cinq ;

b) l'oxydation est faite :

- soit à une température de 600° C à 800° C et une teneur en vapeur d'eau de 8 % à 2 % ;

- soit à une température de 900° C à 1100° C et une teneur en vapeur d'eau de 4 % à 0,5 % ;

et, en cas de présence d'hydrogène, un rapport vapeur d'eau/hydrogène supérieur ou égal à trois et une teneur en hydrogène inférieure ou égale à 1 %.

c) l'une au moins des atmosphères, qui contient de la vapeur d'eau et qui concerne la décarburation, l'oxydation ou le scellement, est obtenue par un mélange d'hydrogène et d'une quantité d'oxygène d'appoint, le cas échéant d'un gaz neutre tel l'azote, l'hydrogène étant en quantité au moins suffisante pour obtenir ensuite par réaction catalytique la teneur désirée en vapeur d'eau et le cas échéant la teneur excédentaire en hydrogène qui correspondent à la composition de l'atmosphère requise.

2. Procédé d'élaboration d'une liaison verre-métal selon la revendication 1, caractérisé en ce que l'oxygène d'appoint est initialement présent dans l'azote, qui est de l'azote brut obtenu par séparation d'air par adsorption ou perméation.

3. Procédé d'élaboration d'une liaison verre-métal selon la revendication 1 ou 2, caractérisé en ce que le catalyseur est du type à autonomie énergétique, notamment du type à palladium sur support d'alumine.

4. Procédé d'élaboration d'une liaison-verre métal selon la revendication 1 ou 2, caractérisé en ce que, dans le cas de teneur en vapeur d'eau inférieure à 1 %, le catalyseur est associé à un moyen de chauffage.

5. Appareil pour la mise en oeuvre du procédé selon l'une quelconque des revendications 1 à 4, caractérisé en ce qu'il comprend une conduite de mélange, raccordée à l'amont à au moins deux conduites d'apport, le cas échéant à trois conduites d'apport, chacune à commande de débit et à l'aval à un réacteur catalytique.

6. Appareil selon la revendication 5, caractérisé en ce que la conduite de mélange incorpore un mélangeur raccordé à l'amont à au moins deux conduites individuelles.

7. Appareil selon l'une des revendications 5 ou 6, caractérisé en ce que la conduite de mélange se subdivise, en aval de la communication avec deux conduites d'apport, en une pluralité de conduites individuelles de mélange, dans chacune desquelles débouche la troisième conduite d'apport et qui sont raccordées chacune à un réacteur catalytique individuel.

8. Appareil selon l'une des revendications 5, 6 ou 7, caractérisé en ce qu'un régulateur de débit massique est incorporé à une ou plusieurs conduites d'apport à commande de débit.

6

Fig.1

Fig.2

Fig.3

Fig.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 345 218 (G.B. BROOKOVER) * Revendications * --- | 1-8 | C 03 C 27/02 C 03 C 27/04 C 01 B 3/00 |
| Y | FR-A-1 565 131 (ASAHI GLASS) * Revendications; page 4, lignes 10-13 * --- | 1-8 | |
| Y | DE-A-2 736 343 (MESSER GRIESHEIM) * Revendications; figure * --- | 1 | |
| Y | EP-A-0 089 183 (CJB DEVELOPMENTS LTD) * Revendication 1 * ----- | 1,3 | |

**DOMAINES TECHNIQUES RECHERCHES (Int. Cl.5)**

C 03 C
C 01 B

**Le présent rapport a été établi pour toutes les revendications**

| Lieu de la recherche | Date d'achèvement de la recherche | Examinateur |
|---|---|---|
| LA HAYE | 25-05-1990 | BOUTRUCHE J.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)